(19) Europäisches Patentamt

European Patent Office

Office européen des brevets

(11) EP 0 697 947 B1

(12) FASCICULE DE BREVET EUROPEEN

(45) Date de publication et mention
de la délivrance du brevet:
**09.04.1997 Bulletin 1997/15**

(21) Numéro de dépôt: **94914454.7**

(22) Date de dépôt: **28.04.1994**

(51) Int. Cl.$^6$: **B29C 31/00**, B29C 49/68,
B29C 49/42, B65G 37/02

(86) Numéro de dépôt international:
**PCT/FR94/00487**

(87) Numéro de publication internationale:
**WO 94/25240 (10.11.1994 Gazette 1994/25)**

(54) **MACHINE DE FABRICATION DE CORPS AYANT CHACUN A SUBIR, EN SUS DE SA PHASE DE TRAITEMENT, UN ARRET OU CYCLE DE TRAVAIL DANS UN POSTE DE TRAVAIL, APRES AVOIR ETE AMENE SUR UN PORTE-CORPS PORTE PAR UN CONVOYEUR A BOUCLE FERMEE**

VORRICHTUNG ZUR HERSTELLUNG VON KÖRPERN AN FESTEN ARBEITSPLÄTZEN, DIE UM EINE GESCHLOSSENE, KREISFÖRMIGE FÖRDEREINRICHTUNG ANGEORDNET SIND UND DER DIE KÖRPER ZUGEFÜHRT WURDEN

MACHINE FOR MANUFACTURING ELEMENTS, EACH ELEMENT HAVING TO BE SUBJECTED, IN ADDITION TO ITS PROCESSING PHASE, TO A HALT OR A WORK CYCLE AT A WORK STATION, AFTER BEING CONVEYED ON AN ELEMENT CARRIER BY MEANS OF A CLOSED PATH CONVEYOR BELT

(84) Etats contractants désignés:
**AT BE CH DE ES FR GB IT LI NL PT SE**

(30) Priorité: **04.05.1993 FR 9305296**

(43) Date de publication de la demande:
**28.02.1996 Bulletin 1996/09**

(73) Titulaire: **LUC-BELMONT, Stéphane**
**F-92200 Neuilly (FR)**

(72) Inventeur: **LUC-BELMONT, Stéphane**
**F-92200 Neuilly (FR)**

(74) Mandataire: **Bloch, Gérard et al**
**2, square de l'Avenue du Bois**
**75116 Paris (FR)**

(56) Documents cités:
**EP-A- 0 060 521**      **DE-B- 1 206 571**
**US-A- 3 507 005**      **US-A- 4 143 776**

Printed by Rank Xerox (UK) Business Services
2.14.2/3.4

## Description

La présente invention a pour objet, au sein d'un système global de production, manutention ou autre, une machine de traitement d'éléments ou produits globalement appelés corps ayant chacun à subir en sus de sa phase de traitement un arrêt, ou cycle de travail, dans un poste de travail après avoir été amenés chacun sur un porte-corps porté par un convoyeur à boucle fermée et avoir effectué ce transfert en un laps de temps déterminé, ce qui est en particulier le cas chaque fois que ce transfert s'accompagne d'un ou plusieurs travaux spécifiques des corps transférées, que ce travail soit actif tel qu'enduction, assemblage, marquage ou chauffage -ou passif- par exemple refroidissement à température ambiante ou relaxation, à l'ambiance, de tensions internes.

Dans le brevet EP-A-0 060 521 est décrite une machine comportant un convoyeur à boucle fermée porteur de porte-corps régulièrement espacés et divisée en deux sections allant chacune d'un poste d'alimentation en corps sur les porte-corps à un poste de travail, les deux postes de travail étant reliés par une presse, les deux sections de convoyeur étant périodiquement entraînées en synchronisme avec le fonctionnement de cette presse, et deux enceintes de traitement couvrant respectivement les deux sections de convoyeur. Il s'agit donc ici sur un même convoyeur de deux machines comportant chacune un poste d'alimentation et un poste de travail unique.

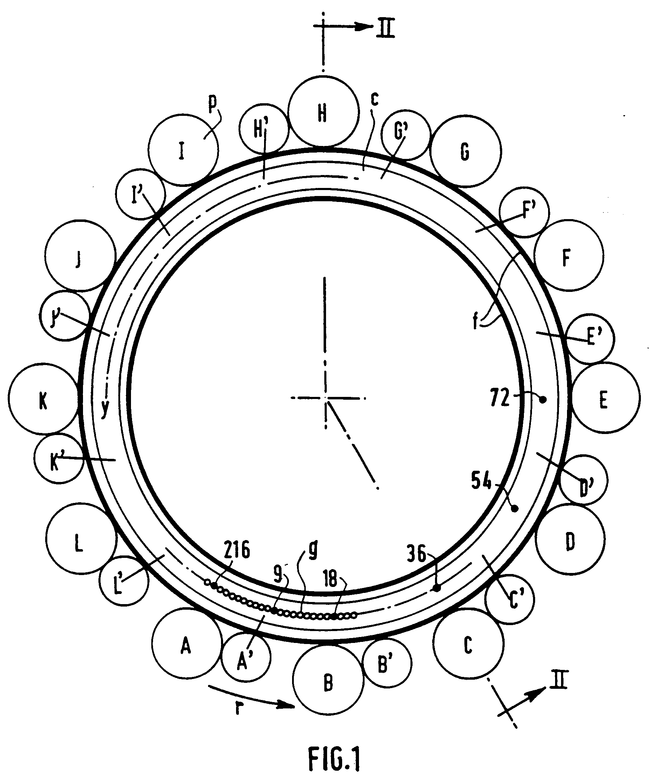

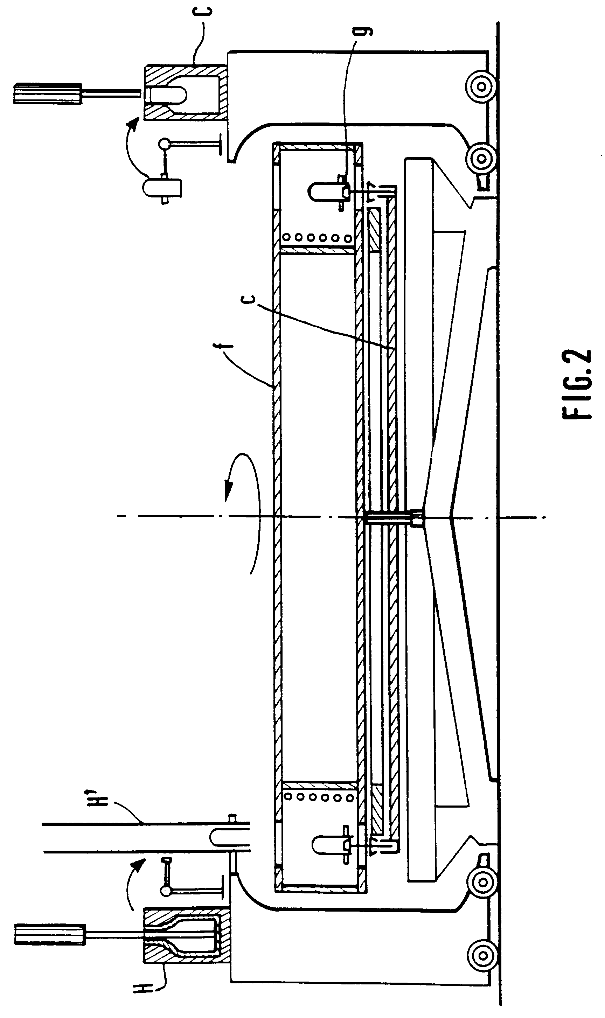

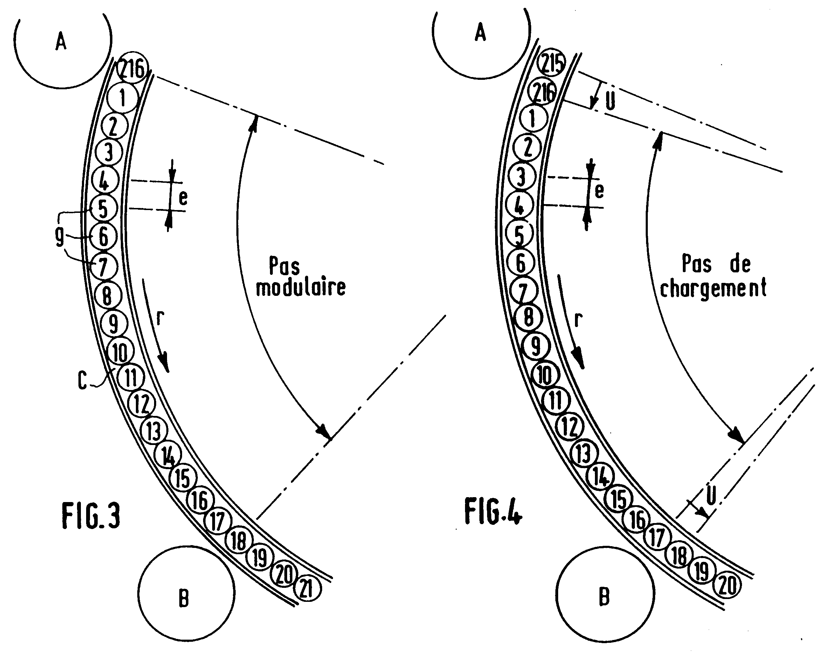

Dans le brevet US-A-4 143 776 est décrite une machine comportant un convoyeur à boucle fermée mais un seul poste de travail (surface de meulage non représentée) et un seul poste d'alimentation (30 figure 1) en amont du poste de travail. Il n'est pas prévu ici d'enceinte de traitement actif.

Dans ces machines connues, on voit que, entre alimentation et chargement au poste de travail, les corps cheminent dans l'ordre chronologique de leur alimentation originelle de bout en bout de leur transfert jusqu'au chargement, inclusivement, et il en résulte que la vitesse de défilement des corps sur le convoyeur est directement conditionnée par la cadence d'ensemble du système global dans lequel il est inclus, imposant par là même d'importantes contraintes et notamment :

a) dans les systèmes de production globaux, tels que machines à grande cadence, les "transitions" c'est-à-dire les deux fonctions d'alimentation du convoyeur puis de chargement du poste de travail qui lui fait suite devront s'opérer à la vitesse de translation ou de rotation d'un convoyeur laquelle, directement fonction de la cadence globale, imposera des vitesses susceptibles de compromettre aux "POINTS DE TRANSITION" entre convoyeur mobile et postes fixes, la fiabilité de ces transitions.

b) à égalité de durée de défilement désirée sur le convoyeur, durée imposée par les impératifs du traitement, toute modification de cadence du système implique une modification parallèle de la longueur du convoyeur.

b') de même à égalité de vitesse de défilement du convoyeur, toute modification à apporter à la durée de défilement sur celui-ci implique également une modification de sa longueur utile.

c) dans la mesure où le poste de travail faisant suite au convoyeur est éclaté en "sous-postes" multiples à charger successivement, il sera nécessaire -le convoyeur ne pouvant, directement, se présenter face à chacun d'eux- soit de recourir à des organes intermédiaires de transfert avant chargement soit de déplacer alternativement à la sortie du convoyeur les sous-postes à charger, en une noria permanente afin de leur permettre de cueillir tour à tour les corps qui leur sont destinés.

d) enfin, supposant le chargement sélectif de chacun des corps transférés au droit de leur prochain poste de travail, en admettant que pareille délocalisation fût possible, encore faudrait-il faire en sorte que ne s'ensuive une dérégulation de la durée de défilement sur convoyeur de certains corps par rapport à leurs homologues donc des traitements différenciés d'un corps à un autre.

La machine suivant l'invention a pour objet de rompre d'avec les sujétions telles qu'exposées ci-dessus et dont l'énumération n'est nullement exhaustive.

A cet effet, la machine selon l'invention est une machine de fabrication de produits, à partir d'éléments ou semi-produits, globalement appelés "corps", ayant à subir, après une phase de traitement actif, un cycle de travail, dans un poste de travail, du type comprenant un convoyeur en boucle fermée, en mouvement continu régulier porteur d'une pluralité de porte-corps régulièrement espacés sur toute sa longueur, et qui comprend une pluralité de postes de travail fixes, autonomes, régulièrement espacés autour du convoyeur, des moyens de chargement de chaque poste de travail par les corps se trouvant successivement en un point fixe de chargement dudit poste de travail, des moyens d'alimentation en corps, fixes, autonomes, associés chacun à un poste de travail respectif, des moyens assurant le débouché des corps de chaque poste d'alimentation sur les porte-corps se trouvant successivement en un point fixe de débouché dudit poste d'alimentation, situé en aval du point de chargement du poste de travail associé par rapport au sens de marche du convoyeur, des moyens de commande indépendants de chacun desdits moyens de chargement des postes de

2

travail et de chacun desdits moyens assurant le débouché de chacun des postes d'alimentation, une enceinte fixe de traitement actif agencée pour y traiter les corps des porte-corps et couvrant la totalité du parcours du convoyeur et munie sur sa paroi d'ouvertures d'accès auxdits points fixes de chargement et auxdits points fixes de débouché.

La machine selon l'invention présente, on le voit, l'avantage que, du fait du recours à un nombre de points d'alimentation identiques au nombre de postes de travail, une machine de très forte cadence de production opère à une vitesse de translation (ou rotation) considérablement réduite.

Cet abaissement de la vitesse évite les déformations des corps transportés par inertie, notamment s'ils sont en état de ramollissement, rend possible les contrôles et interventions en cours de fabrication et sans arrêt de la machine et facilite les transitions (alimentation et chargement, notamment). Il diminue parallèlement l'usure des pièces en mouvement avec la réduction concomitante des frais d'entretien.

Dans une réalisation préférée, les dits moyens de commande sont agencés pour que chaque poste de travail soit chargé par le corps ayant débouché sur un porte-corps au point avec lui spatialement associé, que, après que le corps d'un porte-corps ait été chargé dans un poste de travail, tous les porte-corps aient chargé une fois avant que le même porte-corps se présente pour un nouveau chargement et que tous les postes de travail aient été chargés une fois avant que n'intervienne à nouveau le chargement de chacun d'eux.

Au cours du chargement d'un groupe de m postes de travail, que l'on dénomera "tournée", la machine peut charger successivement les postes dans l'ordre de leur succession (dans un sens ou dans l'autre) dans l'espace ou encore dans un autre ordre programmé, ce changement d'ordre s'effectuant de préférence instantanément et sans arrêt de la machine. La machine peut aussi, au cours d'une tournée charger simultanément plusieurs postes de travail ou même l'ensemble de ses postes.

La machine selon l'invention s'applique particulièrement bien à la fabrication dans laquelle les corps à traiter sont des préformes en matière plastique, destinées à être chargées, à une température optimale de soufflage, dans un moule pour former un produit creux, les porte-corps sont des organes supports de ces préformes, le convoyeur circule dans un four fixe et chaque poste de travail est constitué par un module groupant au moins un organe de production tel qu'un moule et le moyen autonome d'alimentation est une goulotte d'alimentation en préformes.

La machine selon l'invention dans laquelle chaque poste de travail sera alimenté à intervalle régulier d'une durée de préférence strictement égale à la durée de son cycle, et l'alimentation de tous les postes répartie régulièrement en ce temps de cycle, présente des caractéristiques que l'on peut définir comme suit, en appelant "module" le groupe constitué par un poste de travail éventuellement associé avec un moyen d'alimentation.

c :       durée de cycle d'un module avant sa reproduction à nouveau des mêmes fonctions.

m :       nombre de modules de la machine.

d :       nombre de porte-corps du convoyeur.

e :       équidistance entre deux porte-corps consécutifs.

P :       valeur $\frac{d}{m}$, c'est-à-dire nombre d'espaces "e" séparant deux modules spatialement consécutifs (ce nombre pouvant ne pas être entier). Nous l'appellerons "pas modulaire".

S :       nombre d'espaces e séparant deux porte-corps mis consécutivement en chargement et opérant donc l'un après l'autre à intervalle de "temps" $\frac{c}{m}$. Ce nombre, qui est un multiple de e, qualifie de ce fait un nombre entier de porte-corps. Nous l'appellerons "pas de chargement".

V :       vitesse circonférentielle (ou linéaire si la boucle parcourue par le convoyeur est autre que circulaire) de défilement du convoyeur donc de progression de chaque porte-corps.

K :       est la cadence horaire de la machine. Elle est égale au nombre de cycles s'inscrivant dans une heure, pour chaque module, multiplié par le nombre de ceux-ci, soit :

$$K = \frac{3\ 600}{c}\ m \text{ et } m = \frac{cK}{3\ 600}$$

A partir de ces données, l'utilisateur de la machine établit un plan de marche en fonction du nombre (S) d'espaces (e) séparant deux porte-corps mis consécutivement en chargement.

Le convoyeur étant en mouvement, nous avons la relation S<P.

U :       la valeur P-S c'est-à-dire celle qui mesure l'avancement réel du convoyeur pendant le temps $\frac{c}{m}$. Nous l'appel-

lerons "pas d'avancement". Ce "pas d'avancement" n'est pas nécessairement un nombre entier d' espaces "e" puisque P n'est pas, lui forcément un nombre entier. Cependant, au bout de "m" chargements successifs (que nous appellerons une tournée) les "m" pas d'avancement devront totaliser un nombre entier de "e" faute de quoi le porte-corps mis en oeuvre au chargement "m + l" ne se trouverait plus à l'aplomb de son module. Il y aura donc lieu de calculer "U" en conséquence afin que :

k :     étant un quelconque nombre entier (coefficient de proportionnalité) :

$$m\,U = ke \text{ d'ou } U = \frac{ke}{m}$$

Le convoyeur progressant de la valeur "U" en un temps de $\frac{c}{m}$ et les porte-corps étant équidistants de la valeur "e" nous aurons :

$$V = \frac{U}{\frac{c}{m}} = \frac{U\,m}{c}$$

qui s'exprimera en cm./seconde si "U" est évalué en centimères et "c" en secondes, donc :

$$U = \frac{V.c}{m}$$

A noter que, toutes choses égales par ailleurs, plus "U" sera petit et moins sera élevée la vitesse circonférentielle de défilement des porte-corps et plus seront facilitées les transitions de ces corps entre les parties fixes et les parties mobiles dans l'espace, telles qu'alimentation ou chargement;

La machine de traitement de l'invention permet, on le comprend, de faire en sorte :

a) que la vitesse linéaire de rotation du convoyeur, qui est sa vitesse circonférentielle si sa trajectoire est un cercle, soit sans commune mesure avec la cadence du système global de production dans lequel s'insère le convoyeur et ainsi considérablement réduite quelqu'en soit la cadence effective globable;

b) que le convoyeur, sans que ne lui soit apportée aucune modification géométrique, puisse être utilisé soit sur sa pleine circonférence soit

b') sur une portion seulement de celle-ci soit encore sur une longueur supérieure à cette circonférence, de par l'effet du maintien des corps en transfert donc en traitement au delà d'un unique tour de convoyeur, dissociant ainsi pleinement la durée de défilement de la cadence du système global dans lequel s'intègre le convoyeur;

c) que chaque corps puisse être chargé par le convoyeur au droit du sous-poste, immobile dans l'espace, auquel il est destiné, subissant ainsi une rigoureuse égalité des conditions de transition entre convoyeur et poste de travail avec ses homologues, ce qui, le parcours étant par hypothèse concomitant avec un quelconque traitement tel que chauffage par exemple, constitue une condition impérative de constance de la qualité des produits.

d) et, afin que ce chargement sélectif et spécifique n'ait, pour aucun des corps transportés, la moindre incidence sur la durée d'utilisation par eux du convoyeur, que chaque corps soit alimenté en un point qui lui aura été spécialement affecté en fonction de son point de sortie donc de la position dans l'espace du sous-poste vers lequel il sera appelé à être chargé.

La machine de l'invention peut trouver une application particulièrement intéressante dans le domaine de la fabrication de corps creux en matières plastiques et plus particulièrement lorsque ceux-ci sont obtenus au moyen de la mise en oeuvre de la technique dite de biorientation.

Dans cette fabrication, les corps creux sont obtenus à partir d'ébauches généralement appelées "préformes", que ces dernières soient alimentées à l'état froid après leur production en tant que semi-produit préalablement fabriqué sur une autre machine ou bien "l'en-cours" de fabrication d'une machine produisant le produit fini à partir du granule de base.

Selon les procédés connus, la préforme portée ou maintenue à sa température optimale de soufflage - soit de par la chaleur rémanente qu'elle recèle à la suite de sa fabrication spécifique soit parce-que, produite préalablement et séparément et dans ce cas appelée à être réchauffée dans un four - est destinée, une fois située à bonne température, à être chargée dans un moule qui, par étirage et soufflage, la transformera en corps creux (flacon, bouteille, pot ou conteneur par exemple).

L'organe normalement utilisé en vue de préparer ce chargement est un système convoyeur sur lequel sont alimentées les préformes maintenues par des moyens appropriés tels que pinces, doigts etc...

Dans le cas d'alimentation de la machine en préformes froides le convoyeur chemine dans un four dont les éléments chauffants peuvent être du type tubes infra-rouges par exemple.

Lorsque la machine de l'invention est une machine de fabrication de corps creux du type ci-dessus, les porte-pièces peuvent être des doigts verticaux équidistants répartis sur la circonférence du convoyeur rotatif cheminant dans un four circulaire fixe et flanqué extérieurement de postes de travail constitués de modules porte-moule également répartis autour du four et regroupant chacun, autour du moule proprement dit, son système de refroidissement par circulation d'eau, sa presse d'ouverture et fermeture, son dispositif d'étirage, sa buse de soufflage, son mécanisme d'introduction de la préforme et d'extraction de la bouteille soufflée, une goulotte d'alimentation en préformes froides des doigts du convoyeur etc... et ceci en autant d'ensembles indépendants autarciques.

Dans ce type de machines, il faut prévoir une durée maximale T de défilement du corps sur le convoyeur, c'est-à-dire au cas ou le traitement dure un tour complet de ce dernier, une stricte répétitivité du traitement subi par chaque corps traité, une sortie du convoyeur (chargement) pour chaque corps à l'aplomb du module auquel il est destiné, en corollaire indispensable, une entrée sur convoyeur (alimentation) de chaque corps en un point déterminé avec précision en fonction des paramètres précités, à cycle constant, possibilité de réglage instantané de ces paramètres sans arrêt de la machine, en cas de modification du cycle, adaptation des paramètres instantanément sans arrêt de la machine.

La longueur Y de convoyeur prise au niveau des porte-corps devra être au moins égale à V.T, V étant la vitesse du convoyeur en centimètre/seconde et T la durée maximale de traitement en secondes, et cette longueur doit être celle maximale pouvant séparer l'alimentation et le chargement de corps. On en déduit que le nombre "d" minimum de porte-corps necessaires est

$$d = \frac{VT}{e}$$

correspondant au traitement administré au corps tout au long du convoyeur pendant que celui-ci effectuera un tour complet.

La machine sera donc munie de moyens permettant de réguler toutes choses égales par ailleurs, le laps de temps pendant lequel chaque corps passe sur le convoyeur, par le changement de l'accouplement spacial de chaque moyen autonome d'alimentation avec son poste de travail homologue, un moyen d'alimentation autre que le précédent prenant son relais pour alimenter le poste de travail considéré, ce décalage spacial se répercutant instantanément dans le même sens et avec la même amplitude à l'ensemble des accouplements, ce décalage collectif simultané pouvant être opéré sans arrêt de la machine ni modification de la marche du convoyeur, le positionnement dans l'espace de l'ensemble des moyens autonomes d'alimentation comme des postes de travail n'étant aucunement modifiés par cette régulation.

A titre d'exemple nullement limitatif, on a illustré schématiquement une machine selon l'invention, en se référant au dessin annexé, sur lequel :

- la figure 1         est une vue schématique en plan du convoyeur et des modules qui l'entourent,

- la figure 2         est une vue en coupe selon la ligne II-II de la fig. 1,

- la figure 3         est une vue schématique en plan d'un secteur de convoyeur entre deux modules, dans une position du convoyeur,

- la figure 4         est une vue similaire à celle de la figure 3 dans la position voisine successive du convoyeur,

- la figure 5         reproduit un plan de marche de la machine,

- les figures 6 à 9    illustrent différents parcours d'un corps entre alimentation et chargement pour différents temps de chauffage dans le four.

La machine est décrite et son fonctionnement expliqué en supposant qu'il s'agit d'une machine de fabrication de corps creux en matière plastique, à partir de préformes qui, après chauffage, sont chargées dans un moule ou elles sont étirées et soufflées.

Les paramètres de la machine sont déterminés comme suit :

on envisage une machine à production K de 12 000 corps/heure et d'un cycle de production par module (c) de 3,6 secondes.

m :       le nombre de modules sera donc de :

$$m = \frac{cK}{3600} = \frac{3,6 \times 12\,000}{3\,600} = 12 \text{ modules}$$

Compte tenu de l'encombrement des corps, l'espace "e" entre deux porte-corps devra être compris entre 5 et 6 centimètres, soit :

$$5 \text{ cm} < e < 6 \text{ cm}.$$

le temps de traitement choisi devra être proche de 65 secondes et, du fait des transitions, nous ne souhaitons pas dépasser la vitesse circonférentielle de V = 20 cm./sec.

Selon la formule

$$d = \frac{V.T}{e}$$

nous aurons approximativement recours à un porte-corps de :

$$\frac{20 \times 65}{5} > d > \frac{20 \times 65}{6} \, ,$$

soit 260 > d > 216,666.

Dans le souci de ne pas surdimensionner la machine, nous opterons pour :

d =     216;

e :     dans ce même souci, nous nous efforcerons de canaliser cette valeur au niveau de la moyenne des valeurs extrêmes 5 et 6 cm., soit e ≃ 5,5 cm.

Y :     en vertu de la formule Y = d.e, sa valeur sera : Y = 216 x 5,5 = 1.188 centimètres environ

R :     d'où

$$R = \frac{Y}{2\pi} = 189 \text{ cm. environ}$$

T :     si nous conservons à T sa valeur d'objectif, soit 65 secondes, nous aurons, compte tenu de la formule

$$V = \frac{Y}{T} :$$

V =     $\frac{1.188}{65}$ ≃ 18,3 cm./sec., cette vitesse circonférentielle se situant dans les limites que nous nous étions fixées;

P :     le pas modulaire est donné par la formule :

$$P = \frac{d}{m} = \frac{216}{12} = 18 \text{ e}$$

Il sera dans ce cas un multiple de "e" ce qui n'est pas obligatoire.

Il reste à fixer "U". Il nous est donné par la formule :

$$U = \frac{V.c}{m} = \frac{18,3 \times 3,6}{12} = 5,5 \text{ centimètres.}$$

e :     c'est finalement cette valeur précise que nous donnerons à "e" et autour de laquelle nous

affinerons avec plus de précision Y, R et V.

Contrôle de "U" :

La condition énoncée plus haut nous impose que sa valeur multipliée par "m" donne un multiple de "e". Dans le présent exemple, c'est bien le cas puisque "m" est un nombre entier par hypothèse et que U = e .

S : "U" étant égal à "e" dans le présent exemple et sachant que U = P - S , nous en déduirons la valeur :

$$S = P - U = P - e = 18 - 1 = 17 \, e.$$

La machine ainsi définie comporte donc un convoyeur circulaire rotatif "C" animé d'un mouvement de rotation uniforme continu dans le sens de la flèche "r". Il porte, équidistants entre eux et répartis sur l'ensemble de sa circonférence, 216 godets porte-corps "g" (figure 1).

Un traitement des pièces à transférer est prévu, par exemple un chauffage, dont la durée est impérativement déterminée et ne saurait être transgressée sans dommages. A cet effet, le convoyeur circule sur l'intégralité de sa périphérie dans un four, par exemple à rayonnement infra-rouge "f" (figure 2).

Sur la figure 2 est représenté le montage du four dans lequel circulent les godets g portés par le convoyeur rotatif c autour duquel sont disposés les modules H (moule) H' (goulotte d'alimentation)... et C (moule). Sont également indiqués, mais non décrits, des moyens d'introduction des préformes dans le moule et de prélèvement hors du moule ainsi que des moyens d'étirage soufflage.

Douze modules fixes, identiques entre eux A-A', B-B', C-C'... et autosuffisants les uns par rapport aux autres sont disposés extérieurement au convoyeur sur une circonférence concentrique à celui-ci, répartis régulièrement sur cette circonférence, leurs axes respectifs faisant entre deux postes consécutifs un angle de $\frac{360}{12}$ = 30 degrés. Leur action, autarcique, est coordonnée par un dispositif de commande central.

Outre leur fonction essentielle de production, chacun des douze modules comporte un système autonome d'alimentation du convoyeur (goulotte) en pièces à traiter. La cadence de production de la machine est fixée à 200 pièces/minute ou 12 000 à l'heure. Chaque poste produit ainsi une pièce toutes les 3,6 secondes et devra donc être chargé à ce rythme.

Il est prévu de charger les pièces sur postes de travail après une durée de traitement (chauffage) impérativement fixée à 44 secondes et, pour éviter toute déperdition anarchique de chaleur, chaque pièce devra abandonner le convoyeur pour son chargement sur poste de travail, rigoureusement à l'aplomb de celui auquel elle est destinée.

Au niveau de la piste "y" sur laquelle s'assujetissent les godets, le convoyeur a une circonférence de 11,88 mètres, l'équidistance "e" entre godets "g" est donc de $\frac{1188}{216}$ = 5,5 cm. Il sera animé au niveau "y" d'une vitesse circonférentielle d'environ 18,5 cm/sec ( 1100 cm/min) c'est-à-dire d'une vitesse angulaire de $\frac{1188}{18,333}$ ≈ 65 sec/tour, 216 godets défilant ainsi en 65 secondes donc 1 godet toutes les 0,3 seconde.

A l'instant (figure 3) où le godet No. 216 se trouvera en regard du poste de travail "A", il sera chargé vers celui-ci. A ce même instant, le godet No. $\frac{216}{12}$ = 18, se trouvera à l'aplomb du poste "B" et ainsi de suite de 18 en 18.

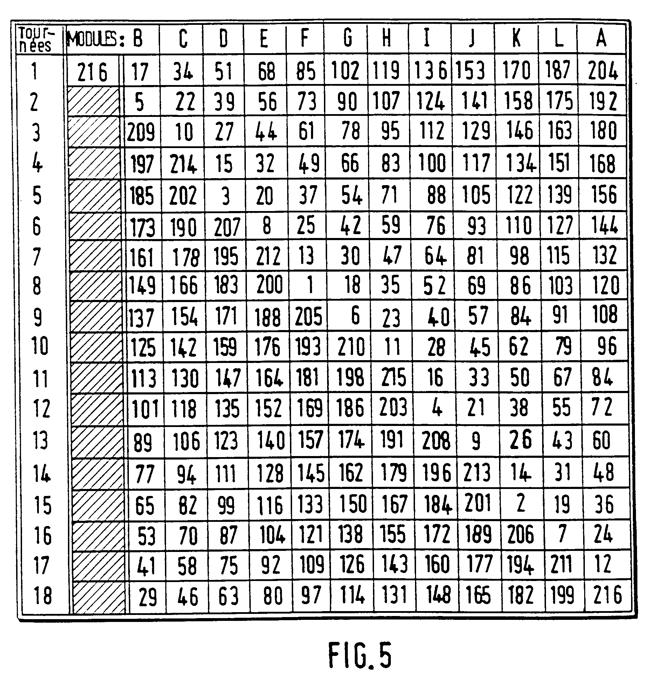

La rotation se poursuivant, au bout de 0,3 seconde (figure 4), c'est le godet No. 18-1 = 17 qui se trouvera aligné sur le poste de travail "B" et pourra, à ce moment, le charger et ainsi de suite. Cette valeur "17" est le "pas de chargement", d'où le tableau :

| poste de travail : | A | B | C | D | etc... |
|---|---|---|---|---|---|
| chargé par godet : | 216 | 17 | 34 | 51 | etc... |

ce réglage pouvant être modifié.

Le plan de marche complet est illustré par la figure 5.

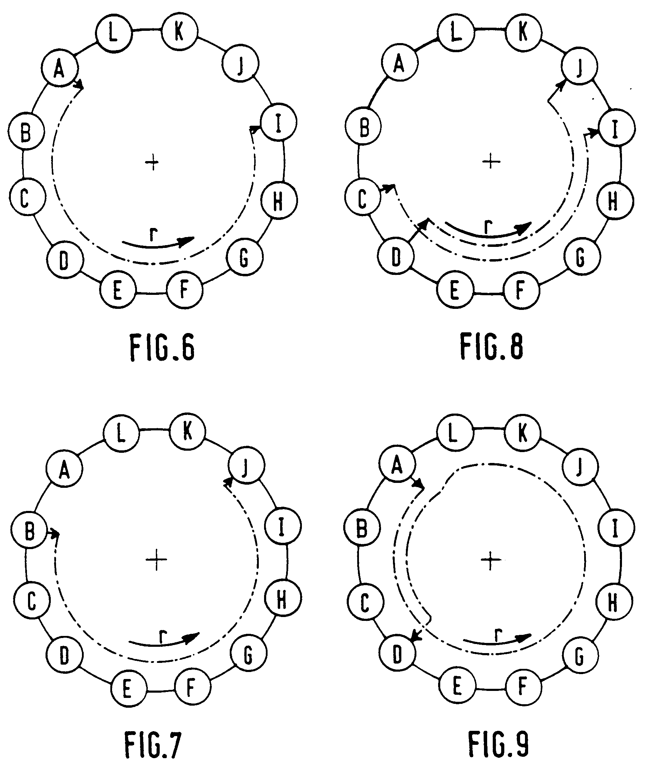

La durée de défilement ayant été fixée à 44 secondes, c'est-à-dire $\frac{44}{65}$ ≈ 8/12 tour de convoyeur, la pièce alimentée en "A" sera déchargée face au poste de travail "I" et ainsi de suite (figures 6 et 7), d'où le tableau de chargement :

| alimentation: | A | B | C | D | E | F | G | H | I | J | K | L |
|---|---|---|---|---|---|---|---|---|---|---|---|---|
| chargement : | I | J | K | L | A | B | C | D | E | F | G | H |

ce réglage pouvant être modifié.

Cet exemple illustre comme suit les avantages remarquables du procédé mis en oeuvre par la machine revendiquée :

a) pour une cadence de 12 000 pièces/heure, la partie en mouvement de la machine circule à une vitesse angulaire extrêmement réduite, en l'occurrence un peu moins d'un tour minute, et une vitesse circonférentielle au niveau des godets de l'ordre de 18,5 cm/s. Cette faible vitesse permet ainsi toutes les transitions d'un dispositif fixe sur un dispositif mobile (alimentation par les goulottes) et vice versa (chargement des postes de travail). Le procédé revendiqué minimise parallèlement, de par la faible vitesse mise en oeuvre, et son mouvement uniforme et continu, les usures des mécanismes ainsi que les à coups de fonctionnement avec les effets favorables de cette douceur de marche sur la fiabilité, la sécurité, les économies de fonctionnement et d'entretien, la consommation d'énergie et surtout la qualité des produits fabriqués et la répétitivité des fabrications;

b) en cas de modification de la cadence le procédé de par la flexibilité du réglage de l'angle de parcours sur convoyeur, permet le respect strict du temps de défilement prédéterminé;

b') à égalité de cadence, le procédé permet, par la seule modification de l'angle de défilement imposé à la pièce transférée, la modification instantanée de la durée de défilement pour l'adapter à la durée de traitement optimale;

c) le procédé permet le chargement des pièces qui leur sont destinées à l'aplomb de chacun d'entre eux sans organe de transit à parcours différenciés et sans recourir au moindre déplacement dans l'espace des postes de travail en vue de cueillir leur pièce et ceci quel que soit leur nombre. Cette immobilité ainsi rendue possible évite les raccordements mobiles de fluides (électricité, eau ou gaz de refroidissement, eaux usées, hydraulique, air comprimé etc...) ainsi que des écarts de positionnement et les effets préjudiciables de l'inertie sur les masses en mouvement. Elle permet des arrimages conséquents d'outillages souvent volumineux, lourds et fragiles;

d) nonobstant ce chargement de proximité, le procédé autocompense, par un réglage différencié judicieux du point d'alimentation de chaque pièce, le décalage du point de chargement par un décalage instantané de même amplitude du point d'alimentation respectant ainsi rigoureusement la durée de défilement désirée donc, s'il y a lieu, la durée prévue pour chaque traitement spécifique (figures 6 et 7);

e) enfin, conçu sur la base d'une action coordonnée de postes de travail modulaires, le système global de production - machine par exemple - permet de recourir à une succession de modules quasiment identiques en vue de la construction d'ensembles de tailles et de cadences très différentes. Il s'ensuit, d'une part, une capacité de standardisation de la production d'ensembles très différenciés à partir de la fabrication de troncs communs, avec tous les avantages techniques et économiques qui en découlent et, d'autre part, la possibilité pour un producteur de machines industrielles de très grande capacité de produire, dans la foulée, en descendant jusqu'à des machines pouvant ne comporter qu'un seul module, des machines à vocation artisanale ainsi que des machines de laboratoire et de station d'essais dont la production serait, sans changement des paramètres technologiques, transposable à des machines de grandes séries.

Réglage de l'angle de défilement :
Au cas où, en cours de fonctionnement, la durée du chauffage s'avérerait trop faible ou excessive, sa modification se ferait instantanément sans que la machine ne soit arrêtée. Il suffirait de déclencher un autre programme - 33 secondes au lieu de 44 secondes par exemple - par simple manipulation de l'ordinateur de commande.
Aussitôt le poste de travail "I" se trouverait alimenté par la goulotte d'alimentation "C" et le poste de travail "J" par la goulotte "D" (figure 8) alors que les goulottes "A" et "B" alimenteraient respectivement les postes "G" et "H" et ainsi de suite.
Selon le même processus que ci-dessus, la durée de défilement sur convoyeur (allongement du chauffage dans l'exemple cité) s'opèrera de la même manière.
Ce défilement peut dépasser un unique tour de convoyeur prolongeant, toujours dans notre exemple, la durée de chauffage au delà des 65 secondes qui sont le temps d'un tour complet (figure 9).
Réglage de la vitesse du convoyeur :
Toujours dans l'exemple exposé, le pas de chargement (S) a été fixé, pour plus de simplicité, à la valeur du nombre de godets séparant deux postes de travail successifs (P), dix huit en l'occurrence, diminuée d'un godet (e), soit :

$$S = P\text{-}e = 18\text{-}1 = 17 \text{ e}.$$

Il convient de noter que, au gré des rapports de vitesse désirés, ce pas "S" peut être fixé à une autre valeur multiple de "e" ou inférieur même à "e", l'unique contrainte étant, qu'après la progression de chaque pas, un godet se présente à l'aplomb du poste de travail à charger et que tous les godets du convoyeur aient été une fois en position de chargement avant qu'un même godet ne soit à nouveau sollicité.

## Revendications

1.  Machine de fabrication de produits, à partir d'éléments ou semi-produits, globalement appelés "corps", ayant à subir, après une phase de traitement actif, un cycle de travail, dans un poste de travail, du type comprenant un convoyeur (c) en boucle fermée, en mouvement continu régulier porteur d'une pluralité de porte-corps (g) régulièrement espacés sur toute sa longueur et qui comprend une pluralité de postes de travail (A, B...H...) fixes, autonomes, régulièrement espacés autour du convoyeur (c), des moyens de chargement de chaque poste de travail par les corps se trouvant successivement en un point fixe de chargement dudit poste de travail, des moyens d'alimentation en corps (A', B', H'), fixes, autonomes, associés chacun à un poste de travail respectif (A, B, H), des moyens assurant le débouché des corps de chaque poste d'alimentation sur les porte-corps (g) se trouvant successivement en un point fixe de débouché dudit poste d'alimentation, situé en aval du point de chargement du poste de travail associé, par rapport au sens de marche du convoyeur, des moyens de commande, indépendants, de chacun desdits moyens de chargement des postes de travail et de chacun desdits moyens assurant le débouché de chacun des postes d'alimentation, une enceinte fixe de traitement actif (f) agencée pour y traiter les corps des porte-corps (g) et couvrant la totalité du parcours du convoyeur et munie sur sa paroi d'ouvertures d'accès auxdits points fixes de chargement et auxdits points fixes de débouché.

2. Machine selon la revendication 1 dans laquelle les dits moyens de commande sont agencés pour que chaque poste de travail (A, B, H..) soit chargé par le corps ayant débouché sur un porte-corps (g) au point avec lui spatialement associe, que, après que le corps d'un porte-corps (g) ait été chargé dans un poste de travail (A, B...H), tous les porte-corps (g) aient chargé une fois avant que le même porte-corps se présente pour un nouveau chargement et que tous les postes de travail aient été chargés une fois avant que n'intervienne à nouveau le chargement de chacun d'eux.

3. Machine selon la revendication 1 ou 2, dans laquelle les postes de travail (A, B,...H) sont portés par des ensembles indépendants autarciques, ou "modules" amovibles rapidement déconnectables du corps de la machine.

4. Machine selon la revendication 3, dans laquelle chacun des dits "modules"porte également le moyen d'alimentation associé au poste de travail (A, B....H).

5. Machine de fabrication selon l'une des revendications 1 à 4, dans laquelle les corps à traiter sont des préformes en matière plastique, destinées à être chargées, à une température optimale de soufflage, dans un moule pour former un produit creux, les porte-corps (g) sont des organes supports de ces préformes, le convoyeur (c) circule dans un four fixe (f) et chaque poste de travail (A, B...H) est constitué par un module groupant au moins un organe de production tel qu'un moule et le moyen autonome d'alimentation est une goulotte d'alimentation en préformes.

## Claims

1. Machine for the manufacture of products from elements or semi-finished products, generally termed "bodies", having to undergo, after an active processing phase, a cycle of work at a work station, of the type comprising a closed loop conveyor (c), moving continuously and regularly, carrying a plurality of body carriers (g) regularly spaced over its whole length, and which comprises a plurality of fixed autonomous work stations (A, B...H...) regularly spaced around the conveyor (c), means for loading each work station with the bodies being located successively at a fixed loading point of the said work station, fixed autonomous means for supplying bodies (A', B', H') each associated with a respective work station (A, B, H), means for discharging the bodies from each supply station onto the body carriers (g) being located successively at a fixed discharge point of the said supply station, located downstream of the point of loading of the associated work station, with respect to the direction in which the conveyor moves, independent control means for each of the said work station loading means and for each of the said means for discharging each of the supply stations, a fixed active processing housing (f) arranged for processing therein the bodies from the body carriers (g) and covering the entire length of the conveyor and provided on its wall with access openings for the said fixed loading points and for the said fixed discharge points.

2. Machine according to claim 1, wherein the said control means are arranged so that each work station (A, B, H..) is loaded with the body having discharged on a body carrier (g) at the point spatially associated therewith, so that after the body of a body carrier (g) has been loaded in a work station (A, B...H), all the body carriers (g) have loaded once before the same body carrier appears for reloading and all the work stations have been loaded once before they are each loaded again.

3. Machine according to claim 1 or 2, wherein the work stations (A, B,... H) are carried by independent self-contained assemblies, or movable "modules", which can be rapidly disconnected from the body of the machine.

4. Machine according to claim 3, wherein each of the said "modules" also carries the supply means associated with the work station, (A, B,...H).

5. Manufacturing machine according to one of claims 1 to 4, wherein the bodies to be processed are preforms of plastics material, intended to be loaded at an optimal blowing temperature into a mould to form a hollow product, the body carriers (g) are support members for these preforms, the conveyor (c) circulates in a fixed oven (f) and each work station (A, B,...H) is comprised of a module including at least one production member such as a mould and the autonomous supply means is a chute for the supply of preforms.

**Patentansprüche**

1. Maschine zur Herstellung von Produkten aus Elementen oder Halbprodukten, allgemein "Körper" genannt, die nach einer Phase der aktiven Behandlung in einer Arbeitsvorrichtung einem Arbeitszyklus zu unterziehen sind, die folgendes aufweist:

   einen sich kontinuierlich und regelmäßig bewegenden Förderer (c) in einem geschlossenen Kreis, der eine Vielzahl von über seine ganze Länge in regelmäßigen Abständen angeordneten Körperträgern (g) trägt und der eine Vielzahl von feststehenden, autonomen Arbeitsstationen (A, B...H...) aufweist, die in regelmäßigen Abständen um den Förderer (c) herum angeordnet sind,

   Einrichtungen zur Beschickung jeder Arbeitsstation mit den Körpern, die sich nacheinander an einer feststehenden Beschickungsstelle dieser Arbeitsstation befinden, jeweils einer Arbeitsstation (A, B, H) zugeordnete feststehende, autonome Einrichtungen (A', B', H') für die Zuführung von Körpern,

   Einrichtungen, die das Entladen der Körper von jeder Zuführungsvorrichtung auf die Körperträger (g) gewährleisten, die sich nacheinander an einer feststehenden Entladestelle dieser Zuführungsvorrichtung befinden, die in Bewegungsrichtung des Förderers hinter der Beschickungsstelle der zugeordneten Arbeitsstation gelegen ist,

   unabhängige Einrichtungen zur Steuerung jeder dieser Einrichtungen zur Beschickung der Arbeitsstationen und jeder dieser Einrichtungen zum Entladen jeder der Zuführungsvorrichtungen, sowie

   ein feststehendes Gehäuse (f) zur aktiven Behandlung, das dazu ausgebildet ist, um darin die Körper der Körperträger (g) zu behandeln, das die gesamte Bahn des Förderers abdeckt und das an den feststehenden Beschickungsstellen und an den feststehenden Entladestellen in seiner Wand mit Zugangsöffnungen versehen ist.

2. Maschine nach Anspruch 1,
   bei der die Steuereinrichtungen so ausgebildet sind, daß jede Arbeitsstation (A, B, H) mit dem Körper beschickt wird, der an der räumlich ihr zugeordneten Stelle auf einen Körperträger (g) entladen worden ist, daß, nachdem der Körper eines Körperträgers (g) in eine Arbeitsstation (A, B...H) geladen wurde, alle Körperträger (g) einmal beschickt worden sind, bevor derselbe Körperträger für eine neue Beschickung zugeführt wird, und daß alle Arbeitsstationen einmal beschickt worden sind, bevor die Beschickung von jeder von ihnen wieder stattfindet.

3. Maschine nach Anspruch 1 oder 2,
   bei der die Arbeitsstationen (A, B...H) von autarken, unabhängigen Einheiten oder "Modulen" getragen sind, die abnehmbar und vom Körper der Maschine schnell abtrennbar sind.

4. Maschine nach Anspruch 3,
   bei der jeder der "Module" auch die der Arbeitsstation (A, B...H) zugeordnete Zuführungseinrichtung trägt.

5. Herstellungsmaschine nach einem der Ansprüche 1 bis 4, bei der die zu behandelnden Körper Vorformen aus Kunststoff sind, die dazu bestimmt sind, bei einer optimalen Blastemperatur in eine Form geladen zu werden, um einen Hohlkörper zu bilden, wobei die Körperträger (g) Organe sind, die diese Vorformen tragen, der Förderer (c) in einem feststehenden Ofen (f) läuft, jede Arbeitsstation (A, B...H) aus einem Modul besteht, der mindestens ein Fertigungsorgan, wie z.B. eine Form enthält, und die autonome Zuführungseinrichtung eine Rinne für die Zuführung von Vorformen ist.

FIG.1

FIG.2

EP 0 697 947 B1

FIG.4

FIG.3

| Tour-nées | MODULES: B | C | D | E | F | G | H | I | J | K | L | A |
|---|---|---|---|---|---|---|---|---|---|---|---|---|
| 1 | 216 | 17 | 34 | 51 | 68 | 85 | 102 | 119 | 136 | 153 | 170 | 187 | 204 |
| 2 | | 5 | 22 | 39 | 56 | 73 | 90 | 107 | 124 | 141 | 158 | 175 | 192 |
| 3 | | 209 | 10 | 27 | 44 | 61 | 78 | 95 | 112 | 129 | 146 | 163 | 180 |
| 4 | | 197 | 214 | 15 | 32 | 49 | 66 | 83 | 100 | 117 | 134 | 151 | 168 |
| 5 | | 185 | 202 | 3 | 20 | 37 | 54 | 71 | 88 | 105 | 122 | 139 | 156 |
| 6 | | 173 | 190 | 207 | 8 | 25 | 42 | 59 | 76 | 93 | 110 | 127 | 144 |
| 7 | | 161 | 178 | 195 | 212 | 13 | 30 | 47 | 64 | 81 | 98 | 115 | 132 |
| 8 | | 149 | 166 | 183 | 200 | 1 | 18 | 35 | 52 | 69 | 86 | 103 | 120 |
| 9 | | 137 | 154 | 171 | 188 | 205 | 6 | 23 | 40 | 57 | 84 | 91 | 108 |
| 10 | | 125 | 142 | 159 | 176 | 193 | 210 | 11 | 28 | 45 | 62 | 79 | 96 |
| 11 | | 113 | 130 | 147 | 164 | 181 | 198 | 215 | 16 | 33 | 50 | 67 | 84 |
| 12 | | 101 | 118 | 135 | 152 | 169 | 186 | 203 | 4 | 21 | 38 | 55 | 72 |
| 13 | | 89 | 106 | 123 | 140 | 157 | 174 | 191 | 208 | 9 | 26 | 43 | 60 |
| 14 | | 77 | 94 | 111 | 128 | 145 | 162 | 179 | 196 | 213 | 14 | 31 | 48 |
| 15 | | 65 | 82 | 99 | 116 | 133 | 150 | 167 | 184 | 201 | 2 | 19 | 36 |
| 16 | | 53 | 70 | 87 | 104 | 121 | 138 | 155 | 172 | 189 | 206 | 7 | 24 |
| 17 | | 41 | 58 | 75 | 92 | 109 | 126 | 143 | 160 | 177 | 194 | 211 | 12 |
| 18 | | 29 | 46 | 63 | 80 | 97 | 114 | 131 | 148 | 165 | 182 | 199 | 216 |

## FIG.5

**FIG.6**

**FIG.8**

**FIG.7**

**FIG.9**